# EUROPÄISCHE PATENTSCHRIFT

(11) **EP 4 056 943 B1**
(45) Veröffentlichungstag und Bekanntmachung des Hinweises auf die Patenterteilung: **21.05.2025**
(21) Anmeldenummer: 21162397.0
(22) Anmeldetag: 12.03.2021
(51) Int. Cl.: B62D 23/00, F41H 7/00, F41H 7/04, B62D 31/00, B62D 27/06, B62D 63/02

(54) **MODULAR AUFBAUBARES FAHRZEUGGESTELL**
MODULAR STRUCTURE FOR VEHICLE
CHÂSSIS DE VÉHICULE MODULAIRE

(43) Veröffentlichungstag der Anmeldung: 14.09.2022
(73) Patentinhaber: ACS Armoured Car Systems GmbH, 86316 Derching (DE)
(72) Erfinder: MÜLLER, Alexander, 86508 Rehling (DE); BÖSER, Nico, 39116 Magdeburg (DE); KOPPOLD, Stefan, 86565 Gachenbach (DE); SCHAUBECK, Sebastian, 82140 Olching (DE)
(74) Vertreter: Stolmár & Partner Patentanwälte PartG mbB

(56) Entgegenhaltungen:
- EP-A2- 0 294 782
- DE-A1- 102017 011 838
- DE-A1- 19 735 594
- DE-A1- 2 751 753
- DE-A1- 3 333 038

## Beschreibung

### Gebiet der Erfindung

Die Erfindung betrifft ein Fahrzeuggestell, das modular aufgebaut ist, sowie ein Fahrzeug mit einem solchen Fahrzeuggestell, insbesondere für die Nutzung in Kampfeinsätzen.

### Stand der Technik

Fahrzeuge, die in Kampfgebieten eingesetzt werden, müssen eine Vielzahl von unterschiedlichen Anforderungen erfüllen. Zu solchen Anforderungen gehören unter anderem der Truppentransport, das Bereitstellen von Sanitätseinrichtungen, Transport von schwerem Gerät oder der Einsatz als leichtes Kampffahrzeug. Aufgrund dieser unterschiedlichen Anforderungen werden solche Einsatzfahrzeuge in einer Art Basisausführung gebaut und dann jeweils entsprechend den Anforderungen weitergebildet. So wird dann beispielsweise ein Basisfahrzeug durch eine A-Säule mit einem Maschinengewehraufsatz ergänzt, oder das Heck durch einen Aufsatz für eine Plane und mit Bänken als Truppentransporter ausgebildet. Diese Anbauten sind üblicherweise einfache Stahlrohre und werden an das Basisfahrzeug fest verschweißt, so dass die Anbauten bei Belastung nicht wegbrechen oder abfallen können. Wenn also ein Basisfahrzeug einmal für einen bestimmten Zweck weitergebildet wurde, ist es in der Regel unmöglich dieses Fahrzeug umzuwidmen.

Die DE 10 2017 011 838 A1 offenbart eine Kraftfahrzeugkarosseriestruktur, mit einem Tragrahmen, wobei der Tragrahmen aus einer Mehrzahl von Strangpressprofilen zusammengebaut ist. Die Strangpressprofile haben zumindest teilweise Aufnahmen zur Aufnahme von Flächenelementen, wobei die Flächenelemente in den Tragrahmen eingesteckt und daran festgelegt sind. Die Strangpressprofile werden über Eckverbinder miteinander verbunden.

Die DE 197 35 594 A1 offenbart eine Einrichtung zur Sicherung der Verfügbarkeit von militärischen Fahrzeugen, insbesondere von gepanzerten Rad- und Kettenfahrzeugen, vorzugsweise zum Schutz vor Mineneinwirkung, dadurch gekennzeichnet, daß die Einrichtung als Schutzschild unter dem Fahrzeug befestigbar ist und aus einer horizontal angeordneten Trägerplatte und im Winkel zur Trägerplatte verlaufenden, auf die Fahrzeugunterseite gerichteten Streben besteht.

### Darstellung der Erfindung

Aufgabe der Erfindung ist es daher, ein Grundgerüst für ein Kampfeinsatzfahrzeug bereitzustellen, das einfach für unterschiedliche Aufgaben aufgerüstet, aber auch umgerüstet werden kann. Diese Aufgabe wird gelöst durch einen Fahrzeugrahmen nach Anspruch 1. Weitere, die Erfindung ausgestaltende Merkmale sind in den Unteransprüchen enthalten.

Eine erfindungsgemäße modular aufbaubare Fahrzeuganordnung umfasst einen Fahrzeugrahmen, wobei der Fahrzeugrahmen eine Vielzahl von Profilen und eine Vielzahl von Verbindungselementen aufweist, wobei jedes Profil mit einem Profilquerschnitt und einer Profillängsachse ausgebildet ist, und wobei die Profile mit den Verbindungselementen lösbar, insbesondere mit einer Schraubverbindung, miteinander verbunden sind, wobei die Profile (20) in ihrem Innern Langlöcher (21, 28) entlang der Profillängsachse zum Befestigen von Verbindungselementen (40) umfassen und die Verbindungselemente (40) mittels der Langlöcher (21, 28) an den Profilen (20) befestigt sind.

Durch die Verwendung von Verbindungselementen und Profilen können unterschiedlichste aber demontierbare Anbauten an einen Fahrzeugrahmen angebracht werden und die Flexibilität der Fahrzeuganordnung wird durch die Möglichkeit Erweiterungen wieder zu demontieren außerordentlich gesteigert. Die Befestigung geschieht bevorzugt mittels Schrauben und schon in die Profile eingebrachte Gewinde, oder über Schrauben und Muttern. Vorzugsweise sind die Profile als Strangpressprofile ausgebildet. Solche Strangpressprofile sind einfach herzustellen und können gleichzeitig eine ausreichend komplexes Profil und Festigkeit haben, um alle Anforderungen für die Fahrzeuganordnung zu erfüllen. Die Strangpressprofile sind vorzugsweise aus Aluminium oder einer Aluminiumlegierung gefertigt. Dadurch wird das Gewicht des Fahrzeugrahmens weiter reduziert.

Ein Profilquerschnitt weist vorteilhafterweise einen Kernbereich und zumindest einen Nutabschnitt auf, wobei der Nutabschnitt an den Kernbereich angrenzt. So sind die Profile kompakt ausgebildet und gleichzeitig flexibel einsetzbar. Ein Nutabschnitt weist jeweils zumindest eine Nut mit einer Hinterschneidung zum Aufnehmen und Halten von Nutzanbauten auf. Dadurch kann jedes Profil auf den Einsatzzweck hin optimiert werden. Das Profil kann eine Vielzahl von Nutabschnitten aufweisen, die umlaufend um die Längsachse der Profile um den Kernbereich herum angeordnet sind. Dadurch bleibt auch bei vielen Nutabschnitten das Profil kompakt und platzsparend. Der Kernbereich des Profils ist vorzugsweise hohl ausgebildet und kann insbesondere eine oder mehrere Verstärkungen aufweisen. Dadurch weist das Profil ein geringes Gewicht auf, behält aber insbesondere auch die notwendige Festigkeit.

Die tragenden Bauteile des Fahrzeugrahmens, also alle Elemente, die fahrbedingte Kräfte übertragen, sind bevorzugt ausschließlich aus Profilen und Verbindungselementen aufgebaut. Dadurch kann die Einsatzfähigkeit eines Fahrzeugs sichergestellt werden, da alle beschädigten Profile und Verbindungselemente einfach ersetzt werden können. Die Verbindung der Profile mittels der Verbindungselemente wird vorteilhafterweise durch Unterstützungselemente verstärkt. Die Unterstützungselemente sind einfach zu montieren und verbessern die Festigkeit an den kritischen Knotenpunkten.

Die Profile umfassen Langlöcher entlang der Profillängsachse zum Befestigen der Verbindungselemente. Insbesondere weisen die Langlöcher selbst ein Gewinde auf oder sie werden mit einem Gewinderohr bestückt, um das Befestigen mittels Schauben zu ermöglichen. Dadurch ist die Ausrichtung der einzelnen Profile in Bezug auf das Verbindungselement klar festgelegt während das Profil gleichzeitig kompakt bleibt, da die Langlöcher erfindungsgemäß im inneren des Profils, insbesondere im Kernbereich ausgebildet sind.

Ferner umfasst die Fahrzeuganordnung eine erste Bodenplatte und eine zweite Bodenplatte, wobei die erste und zweite Bodenplatte voneinander beabstandet sind und insbesondere am gleichen Profil befestigt sind. Dadurch wird der Personenschutz im inneren des Fahrzeugs verbessert. Die erste Bodenplatte ist unter der zweiten Bodenplatte angeordnet und vorzugsweise aus Stahl, während die zweite bevorzugt aus Aluminium oder einer Aluminiumlegierung hergestellt ist. Die zweite Bodenplatte weist bevorzugt eine größere Wandstärke als die erste Bodenplatte auf.

Die Verbindungselemente weisen bevorzugt Anschläge für die Ausrichtung der Profile auf. Dadurch kann sichergestellt werden, dass die Bohrungen der Profile und der Verbindungselemente übereinstimmen und die Montage und das Befestigen der Profile an den Verbindungselementen erleichtert werden.

Eine erfindungsgemäße Fahrzeuganordnung umfasst vorzugsweise ferner ein Fahrgestell, wobei das Fahrgestell mit dem Fahrzeugrahmen über Lagerelemente verbunden ist und wobei das Fahrgestell unterhalb des Fahrzeugrahmens angeordnet ist. Das Fahrgestell (12) weist eine erste Bodenplatte und der Fahrzeugrahmen eine zweite Bodenplatte auf, wobei die erste und zweite Bodenplatte voneinander beabstandet sind. Das Fahrgestell kann außerdem zumindest einen Antrieb und eine Rolleinrichtung aufweisen.

### Kurze Beschreibung der Figuren

Figur 1 zeigt einen Rahmen mit Profilen und Verbindungselementen, der für einen Kabinenabschnitt vorgesehen ist;
Figur 2 zeigt einen Rahmen mit Profilen und Verbindungselementen, der für einen Lastabschnitt vorgesehen ist;
Figur 3 zeigt einen erfindungsgemäßen Fahrzeugrahmen, der die Rahmen aus den Figuren 1 und 2 kombiniert und bei dem die Profile nur schematisch dargestellt sind;
Figuren 4a-d zeigen verschiedene Ausführungsformen eines Verbindungselements zum Verbinden zweier oder mehrerer Profile;
Figur 5a zeigt eine Erweiterung des Fahrzeugrahmens für eine Abdeckung des Ladeabschnitts;
Figur 5b zeigt eine Erweiterung des Fahrzeugrahmens für eine A-Säule;
Figur 5c zeigt einen Fahrzeugrahmen mit montierten Erweiterungen aus Figur 5a und 5b;
Figuren 6a-c zeigt unterschiedliche Ausführungsformen eines ersten verstärkten Profils mit einem Kernbereich und drei Nutabschnitten;
Figuren 7a-c zeigen unterschiedliche Ausführungsformen eines zweiten Profils mit einem Kernbereich und zwei Nutabschnitten;
Figuren 8a-c zeigen unterschiedliche Ausführungsformen eines dritten Profils mit einem Kernbereich und vier Nutabschnitten;
Figuren 9a und b zeigen eine isometrische Ansicht zweier Profile; und
Figur 10 zeigt ein Fahrzeug mit einem erfindungsgemäßen Fahrzeugrahmen und einem Fahrgestell.

### Beschreibung der bevorzugten Ausführungsformen

Ein erfindungsgemäßer Fahrzeugrahmen 10 weist Profile 20 und Verbindungselemente 40 auf. Grundsätzlich können die Profile 20 beliebig ausgebildet sein, so dass beispielsweise ein Profil 20 gebogen sein kann oder auch mehrere Profile 20 verschweißt sein können um einen Basisrahmen bereitzustellen. Im Prinzip kann der Basisrahmen also durch Verschweißen oder ähnliches einstückig ausgebildet sein. Wichtig ist, dass der Basisrahmen auch Verbindungselemente 40 aufweist, mittels der die Erweiterungen für den Fahrzeugrahmen 10 an den Basisrahmen angebracht werden können. Es ist jedoch bevorzugt, dass der gesamte Fahrzeugrahmen 10 aus einzelnen, mittels Verbindungselementen 40 verbundenen Profilen ausgebildet ist. Bevorzugt sind die Profile auch nicht selbst gebogen, sondern gerade ausgebildet. Vorgesehene Krümmungen werden dann mit entsprechenden Verbindungselementen 40 verwirklicht, wie nachfolgend noch erläutert wird.

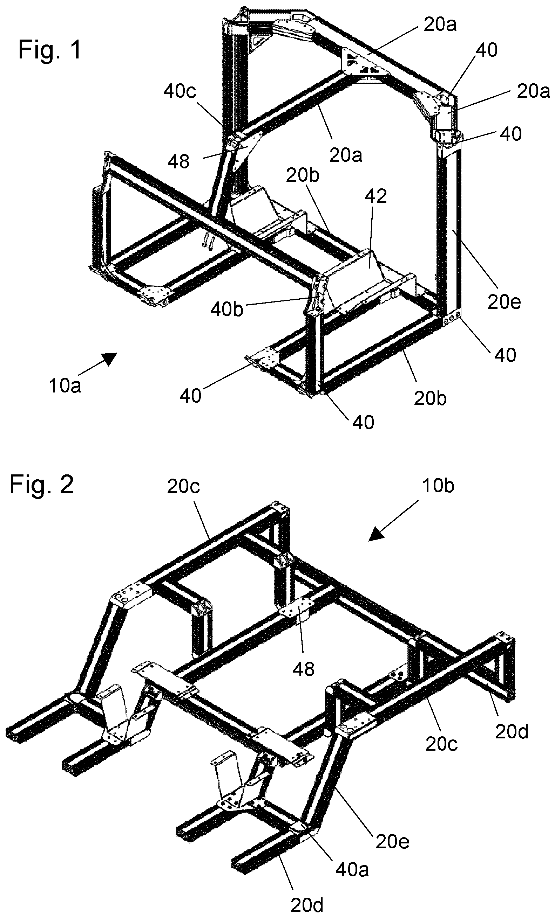

In Figur 1 ist ein Rahmen 10a eines Kabinenabschnitts 10a dargestellt. Der Kabinenabschnitt 10a umfasst eine Vielzahl von Profilen, die hier beispielhaft als gerade Strangpressprofile ausgebildet sind. Die einzelnen Profile 20 sind über Verbindungselementen 40 befestigt, die jeweils zwei oder mehrere Profile 20 miteinander verbinden. Die Profile können senkrecht oder in anderen Winkeln zueinander angeordnet sein. Der Kabinenabschnitt 10a bildet die Fahrkabine des Fahrzeugrahmens 10, in dem der Fahrer und mögliche Beifahrer sitzen und das Fahrzeug steuern und weist so wenige Profile 20 wie möglich auf, um das Gewicht des Fahrzeugrahmens 10 zu minimieren. Der Kabinenabschnitt 10a kann außer den Verbindungselementen 40 auch Vorrichtungen 42 umfassen, die für das montieren von Kabineneinrichtung wie beispielsweise Personensitze vorgesehen sind. Der gezeigte Kabinenabschnitt 10a weist Profile 20a für eine Dachkonstruktion und Profile 20b für eine Bodenkonstruktion auf, wobei in der gezeigten Basisausstattung die A-Säulen noch nicht angebaut sind. Die Boden-und die Dachkonstruktion sind hier mit vertikal ausgerichteten oder geneigten Profilen 20e miteinander verbunden.

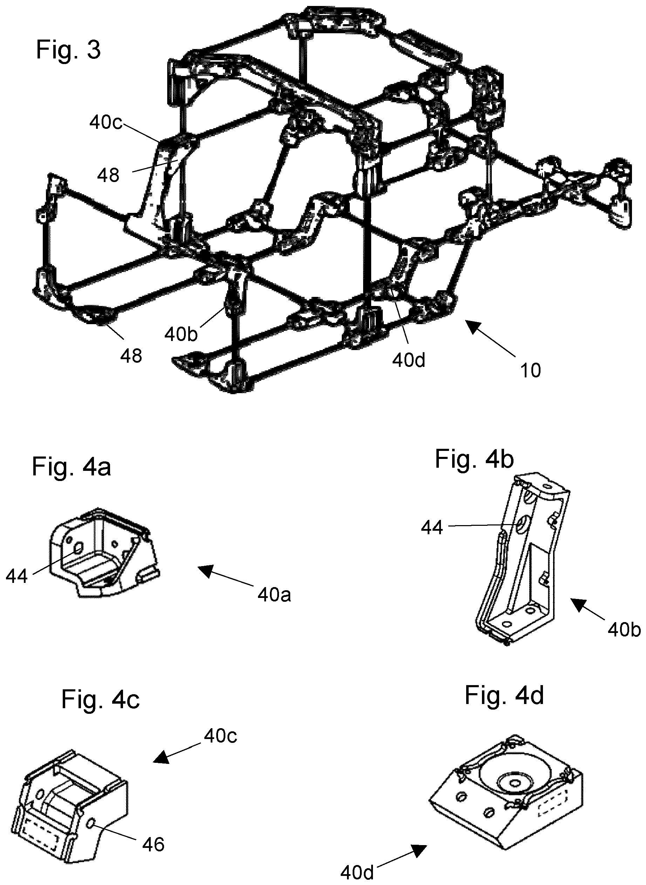

In Figur 2 ist ein Ladeabschnitt 10b dargestellt, der auch aus Bodenprofilen 20d und aus oberen Profilen 20c ausgebildet ist. Der Ladeabschnitt 10b formt den hinteren Teil des Rahmens und soll grundsätzlich als Ladefläche dienen, auf der Ausrüstung, Vorräte oder Personen transportiert werden können. Diese Profile 20c, 20d sind ebenfalls mit vertikalen oder geneigten Profilen 20e verbunden. Figur 3 zeigt eine erfindungsgemäße Fahrzeuganordnung, die eine Kombination des Kabinenabschnitts 10a und des Ladeabschnitts 10b ist. Die meisten Profile 10 sind hier nur schematisch durch Striche dargestellt, die zwischen den Verbindungselementen 40 angeordnet sind. Ferner umfasst diese Fahrzeuganordnung auch Profile für eine C-Säule 22, die in den Figuren 1 und 2 nicht dargestellt ist.

In den Figuren 4a-d sind verschiedene Verbindungselemente 40 gezeigt. Die gezeigten Verbindungselemente 40 sind nur eine beispielhafte Auswahl und keine abschließende Darstellung aller in dieser Ausführungsform verwendeten Verbindungselemente 40. Wie oben erwähnt verbinden die Verbindungselemente 40 zwei oder mehrere Profile 20 an vorbestimmten Knotenpunkten. Die Verbindungselemente 40 werden lösbar an den Profilen angebracht, insbesondere mit Schraubverbindungen. Die Verbindungselemente 40 können mit den Profilen 20 überlappen, um eine verbesserte Steifigkeit in den Knoten zu erhalten. Das heißt, dass die Verbindungselemente 40 die Profile aufnehmen oder zumindest seitlich entlang der Profillängsachse mit den Profilen 20 in Kontakt stehen. Die Schraubverbindungen können prinzipiell an diesen Überlappungen vorgesehen sein und von der Seite in die Profile eingebracht werden. Dafür können in den Profilen Bohrlöcher vorgesehen sein, die im Falle von Strangpressprofilen nachträglich eingebracht werden können. Solche seitlichen Schraubverbindungen können aber auch über Nutensteine ausgeführt sein, wie später in Bezug auf die Profile noch detailliert ausgeführt wird. Erfindungsgemäß ist jedoch vorgesehen, dass die Verbindungselemente 40 an der Stirnseite der Profile 10 befestigt werden, wie es beispielsweise in den Figuren 1-3 gezeigt ist. In den Figuren 4a bis 4c sind Verbindungselemente 40 dargestellt, die ein, zwei oder drei Profile 20 miteinander verbinden können. Für Schraubverbindungen können bspw. in den Bohrlöchern Gewinde vorgesehen sein oder die Profile werden über eine Schrauben-Mutter-Verbindung verwirklicht. Ferner können die Verbindungselemente auch einen oder mehrere Anschläge aufweisen, gegen die die Profile 20 bei der Montage angelegt werden können, um die Profile und die Verbindungselemente 40 zueinander auszurichten. Dadurch liegen dann auch die Bohrungen von Schraubverbindungen an exakten zueinander ausgerichteten Positionen.

Das Verbindungselement 40a kann beispielsweise im Ladeabschnitt eingesetzt werden und verbindet dort drei Profile 20 miteinander. Das Verbindungselement 40b wird im Kabinenabschnitt 10a an der Vorderseite verwendet, wo es ebenfalls drei Profile 20 miteinander verbindet. Das Verbindungselement 40c ist am Dachbereich an der Vorderseite des Kabinenabschnitts 10a angeordnet und verbindet die Profile 20, die dann im fertigen Fahrzeug mögliche Frontscheiben trennen. Das in Figur 4d gezeigte Verbindungselement 40d dient hier zum Anbringen der Befestigungsvorrichtungen 42 an dem Fahrzeugrahmen 10.

Die Verbindungselemente 40 können durch seitliche Unterstützungselemente 48 verstärkt werden, die an das jeweilige Verbindungselement 40 und an die damit verbundenen Profile 20 angebracht werden können. Das Unterstützungselement 48 ist bevorzugt plattenförmig ausgebildet. Dadurch wird die Steifigkeit der Verbindung erhöht, die durch zusätzliche Verstärkungsrippen noch einmal verbessert werden kann. Die Verbindungselemente 40 können ferner auch so eingerichtet sein, so dass weitere Profile 20 an den jeweiligen Verbindungselementen 40 befestigt werden können. Als ein Beispiel hierfür kann das Verbindungselemente 40c dienen, in dem seitliche Bohrlöcher 46 ausgebildet sind, mittels der ein weiteres Profil 20 befestigt werden kann. Ein dort angebrachtes seitliches Unterstützungselement 48 weist dann ebenfalls ein Bohrloch auf.

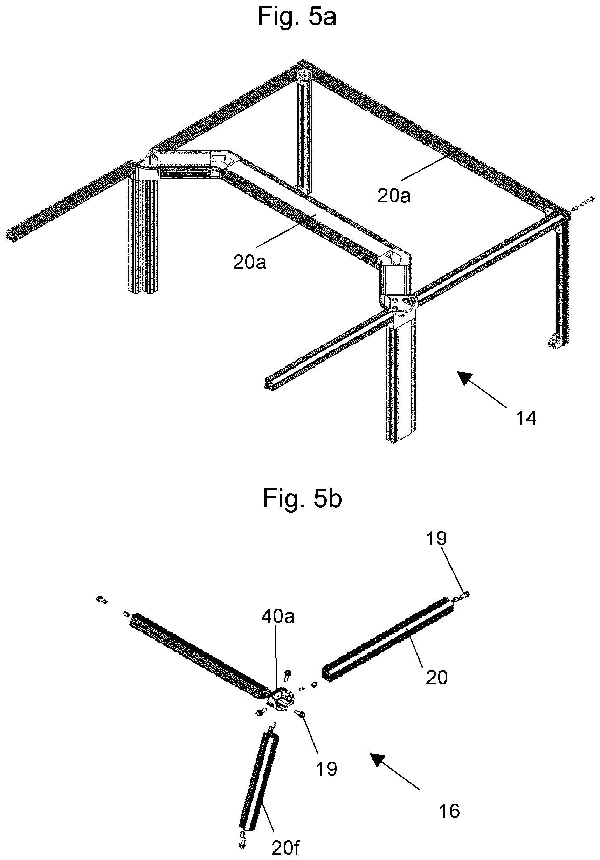

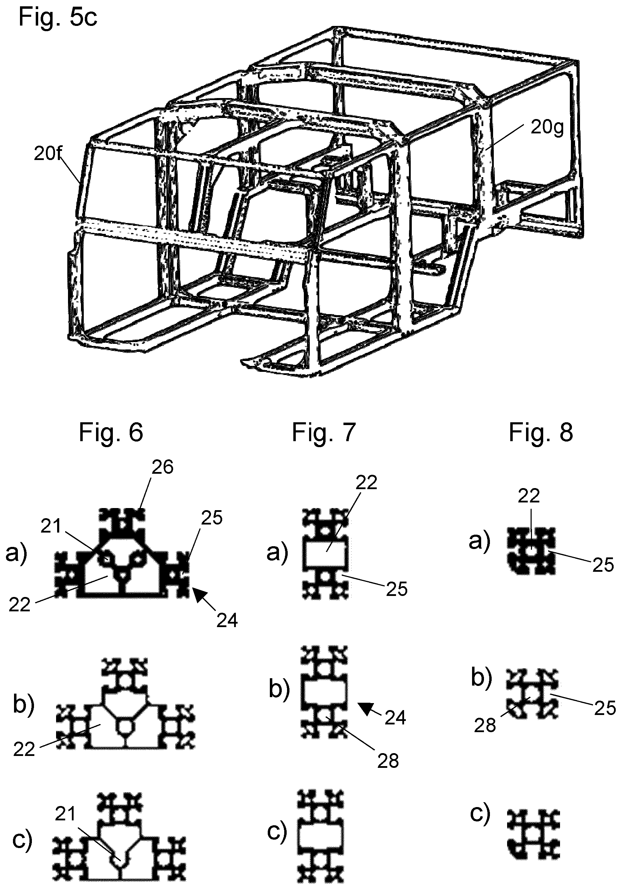

In Figur 5a ist ein Dachaufbau 14 für den Ladeabschnitt 10b dargestellt. Der Dachaufbau 14 ist aus einzelnen Profilen 10 und Verbindungselementen ausgebildet. Dieser Dachaufbau 14 umfasst eine C- und eine D-Säule, und bedeckt vorzugsweise den gesamten Ladeabschnitt 10b. Der Ladeabschnitt 10b kann ebenfalls durch solche durch Profile ausgebildeten Zusatzmodule verlängert werden. In Figur 5b ist eine A-Säule 16 dargestellt, die an das mittlere Profil 20 am Kabinenabschnitt 10a angebracht werden kann. Durch die A-Säule ist der Kabinenabschnitt 10a stabiler und kann die Insassen besser schützen. in Figur 5c ist schließlich ein Fahrzeugrahmen 10 dargestellt, bei dem sowohl der Dachaufbau 14 als auch die A-Säulen 16 montiert wurden.

In den Figuren 6-8 sind verschiedene Profilquerschnitte dargestellt für drei unterschiedliche Profilausführungen. Die Profile 20 sind vorzugsweise aus Aluminium oder einer Aluminiumlegierung hergestellt. In diesen Figuren sind Profilausführungen mit einem Kernbereich 22 und Nutabschnitten 24 gezeigt. Der Kernbereich 22 ist der Bereich des Profils 20, der die Kräfte und Momente der Belastung im Einsatz des Fahrzeugs größtenteils aufnimmt. Der Nutabschnitt wird allerdings ebenfalls dazu verwendet, die Unterstützungselemente 48 fest mit den Profilen 20 zu verbinden, dient aber auch einer einfachen Befestigungsmöglichkeit von Nutzanbauten wie beispielsweise Haken, Ösen, zusätzlichen Panzerplatten, Transportregalplatten oder beliebige andere Anbauten.

Der Kernbereich 22 des Profils 20 ist vorzugsweise hohl ausgebildet, um Gewicht bei den Profilen 20 zu sparen. Der Kernbereich kann Verstärkungsstreben 27 aufweisen. Die Nutabschnitte 24 weisen eine Nut 25 auf und angrenzende Vorsprünge 26 auf. Die Nut weist vorzugsweise Hinterschneidungen auf, insbesondere eine zum Nutgrund parallele Hinterschneidung um eine Art T-Nut zu erzeugen, so dass mittels Nutensteinen 30 andere Profile 20, Nutzanbauten oder Unterstützungselemente 48 an den Nuten 25 befestigt werden können.

In den Figuren 6a-c ist ein erstes Profil 20 abgebildet, die als T-Profile bezeichnet werden können und bei denen der Kernbereich 22 und die Nutabschnitte 24 leicht unterschiedlich ausgebildet sind. In den Figuren 6a-c unterscheidet sich der Nutabschnitt 24 in der Breite der Nut 25 und in der konkreten Form der Vorsprünge 26. Hier weist jeder Nutabschnitt drei Nuten 26 auf, die zueinander senkrecht ausgerichtet sind. Der Kernbereich 22 ist bei allen Ausführungen hohl ausgebildet und unterscheidet sich in der Anzahl und Form der Langlöcher oder Bohrungen 21. Die Langlöcher 21 dienen erfindungsgemäß zum Befestigen der Verbindungselemente 40. Dazu wird in die Langlöcher 21 ein Gewinde eingeschnitten oder ein Gewinderohr eingesetzt, welches in der Regel aus einem härteren Material (z.B. Stahl, Edelstahl) ausgebildet ist, als die Profile. In Figur 6a sind drei Langlöcher 21 vorgesehen, die jeweils in durch Streben 27 miteinander und mit den Wänden des Kernbereichs 22 verbunden sind. Dadurch kann das entsprechende Verbindungselement 40 besser befestigt werden. Figur 6b zeigt eine Ausführungsform, bei der nur ein Langloch 21 vorgesehen ist, der über Streben gehalten wird. Hier ist das Langloch 21 mit einem größeren Innendurchmesser ausgebildet, was für die Verwendung eines Gewinderohrs gedacht ist. Und in Figur 6c ist eine bevorzugte Ausführungsform dargestellt, bei der ein Langloch 21 vorgesehen ist, der auf einer Seite offen ausgeführt ist. Das ist zum einen für ein im Strangpressverfahren hergestelltes Profil 20 eine besser geeignete Form, zum anderen lassen sich in ein offenes Langloch 21 die oben erwähnten Gewinderohre einfacher einbringen.

In den Figuren 7a-c ist ein I-Profil dargestellt, das zwei Nutebereiche auf gegenüberliegenden Seiten des Kernbereichs aufweist. Die Nuten des Nutabschnitts sind hier ebenfalls als T-Nuten ausgebildet, die wie bei dem T-Profil senkrecht zu den jeweils benachbarten Nuten ausgerichtet sind. In Figur 7a ist eine Bohrung 28 zur Befestigung eines Verbindungselements 40 gezeigt, die im Vergleich zu den Bohrungen 28 in den Figuren 7b und 7c mit einem geringeren Durchmesser ausgeführt ist.

Und in den Figuren 8a-c ist ein Kernbereich 22 mit vier Nutabschnitten 24 dargestellt, die alle umfänglich um den Kernbereich angeordnet sind. Dieser Kernbereich 22 ist schmaler als der aus den Figuren 6 und 7. Daher weist hier auch jeder Nutabschnitt 24 nur eine Nut 25 auf.

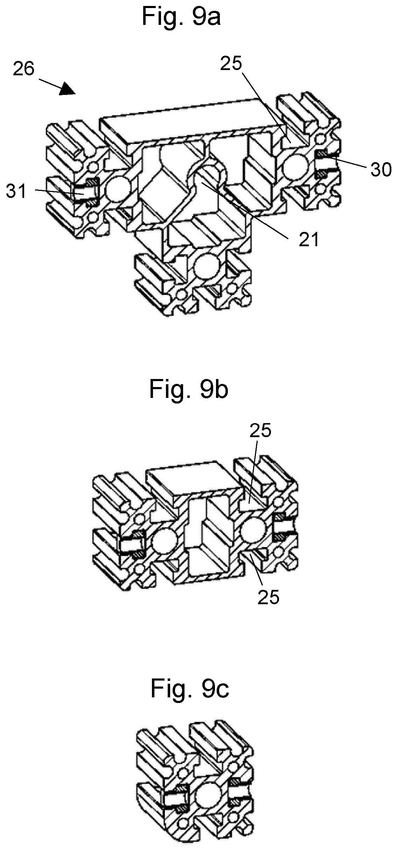

In den Figuren 9a und 9c sind beispielhaft die Profile aus den Figuren 6b und 7b in einer isometrischen Ansicht gezeigt. Der Kernbereich in Figur 9a weist ein mittiges Langloch 21 und Verstärkungsstreben 27 auf, die sich vom Langloch 21 zu den Profilwänden des Kernbereichs 22 erstrecken. An der Schnittfläche in der T-Nut ist ein Nutenstein 30 dargestellt mit dem unterschiedlichste Nutzanbauten, Verbindungselemente 40 und Unterstützungselemente 48 angebracht werden können. Dazu weist der Nutenstein 30 selbst eine komplementäre Gestalt (hier einen T-förmigen Querschnitt) und ein Innengewinde 31 auf, so dass er beim Festziehen mit einer Schraube gegen die Hinterschneidung der Nut 25 drückt und das Festzuziehende Element gegen das Profil 20 zieht und dort festklemmt. Figur 9b zeigt dann das I-Profil, in dem ebenfalls t-förmige Nutensteine 30 in der Nut 25 des Nutabschnitts 24 vorgesehen sind.

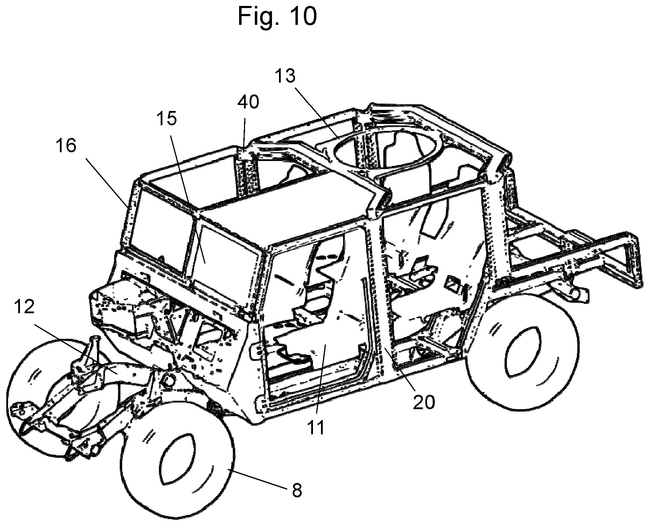

In Figur 10 ist ein schließlich eine Fahrzeuganordnung mit einem erfindungsgemäßen Fahrzeugrahmen 10. Die Fahrzeuganordnung weist ein Fahrgestell 12 auf, an dem die Reifen, der Antrieb mit Motor, Getriebe, usw. gelagert sind und die eine Rolleinrichtung 8 aufweist. Die Rolleinrichtung 8 ist hier als eine normale Radeinrichtung ausgebildet, aber es ist ebenfalls möglich, dass statt Rädern ein Kettenantrieb verwendet werden kann. In der gezeigten Ausführungsform umfasst die Fahrzeuganordnung ferner auch vier Sitze 11 und eine Dachluke 13. An der Dachluke bzw. dem benachbarten Profil 20 kann mit Hilfe der Nutabschnitte 24 beispielsweise ein Maschinengewehr befestigt werden. Die A-Säule 16 ist ebenfalls zusammen mit klappbaren Windschutzscheiben 15 am Basisrahmen befestigt. Der Ladeabschnitt 10b ist hier dagegen ohne den Dachabschnitt vorgesehen. Mit einem I-Profil wie es bspw. in Figur 9b dargestellt ist, können Bodenbleche an dem Fahrzeug befestigt werden. An der Unterseite des Profils 20 wird dann ein erstes Bodenblech an der Nut 25 befestigt, insbesondere ein Bodenblech aus Stahl, das 2-5mm Wandstärke aufweisen kann. An der gegenüberliegenden Nut 25 des I-Profils wird dann ein zweites Bodenblech befestigt, so dass die Dicke des I-Profils einen Abstand zwischen dem ersten und dem zweiten Bodenblech definiert. Das zweite Bodenblech ist vorzugsweise aus Aluminium ausgebildet und weist idealerweise eine dickere Wandstärke auf, als das erste Bodenblech. So kann das erste Bodenblech die Energie einer Explosion beispielsweise einer Landmine aufnehmen und abfangen, indem sich das erste Bodenblech verformt. Durch den Abstand der beiden Bodenbleche wird aber vermieden, dass die Energie an das zweite, beabstandete Bodenblech weitergeleitet wird, so dass die Insassen vor der Verformung im ersten Bodenblech optimal geschützt sind.

Mit den hier vorgestellten Profilen 20 und Verbindungselementen 40 können nahezu beliebige Fahrzeugrahmen im Baukastenprinzip erstellt werden. Konkret wurden hier ergänzbare A-Säulen und Dachaufbauten vorgestellt, die modular an den Basisrahmen angebracht werden können. Da die Befestigung der Profile 20 und Verbindungselemente 40 lösbar ausgebildet sind, können beschädigte Teile einfach ersetzt werden, selbst wenn die Beschädigung am inneren Teil des Rahmens vorhanden ist. Ein weiterer Vorteil ist bei Profilen 20 die im Strangpressverfahren hergestellt sind, dass Ersatzteile mit einfachem Werkzeug aus mitgeführter Profilmeterware zugeschnitten werden können.

### Bezugszeichenliste

- 8: Rolleinrichtung
- 10: Fahrzeugrahmen
- 10a: Kabinenabschnitt
- 10b: Ladeabschnitt
- 12: Fahrgestell
- 13: Dachluke
- 14: Dachaufbau
- 15: klappbare Windschutzscheibe
- 16: A-Säule
- 20: Profil
- 20a: Dachprofil
- 20b, 20d: Bodenprofil
- 20c: oberes Profil
- 20e: vertikale Profile
- 21: Langloch
- 22: Kernbereich
- 24: Nutabschnitt
- 25: Nut
- 26: Vorsprung
- 27: Verstärkungsstrebe
- 28: Bohrung
- 30: Nutenstein
- 31: Gewindebohrung
- 40: Verbindungselement
- 42: Vorrichtungen
- 44: Bohrloch
- 46: seitliches Bohrloch
- 48: Unterstützungselemente

## Patentansprüche

1. Modular aufbaubare Fahrzeuganordnung umfassend einen Fahrzeugrahmen (10), wobei der Fahrzeugrahmen (10) eine Vielzahl von Profilen (20) und eine Vielzahl von Verbindungselementen (40) aufweist, wobei jedes Profil (20) mit einem Profilquerschnitt und einer Profillängsachse ausgebildet ist, und wobei die Profile (20) mit den Verbindungselementen (40) lösbar miteinander verbunden sind
**dadurch gekennzeichnet, dass**
die Profile (20) in ihrem Innern Langlöcher (21, 28) entlang der Profillängsachse zum Befestigen von Verbindungselementen (40) umfassen und die Verbindungselemente (40) mittels der Langlöcher (21, 28) an den Profilen (20) befestigt sind.

2. Fahrzeuganordnung nach Anspruch 1, wobei ein Profilquerschnitt einen Kernbereich (22) und zumindest einen Nutabschnitt (24) aufweist, und wobei der Nutabschnitt (24) an den Kernbereich (22) angrenzt.

3. Fahrzeuganordnung nach Anspruch 2, wobei der Nutabschnitt (24) zumindest eine Nut (25) mit einer Hinterschneidung zum Aufnehmen und Halten von Nutzanbauten aufweist.

4. Fahrzeuganordnung nach Anspruch 2 oder 3, wobei das Profil (20) eine Vielzahl von Nutabschnitten (24) aufweist, die umlaufend um die Längsachse der Profile (20) um den Kernbereich (22) herum angeordnet sind.

5. Fahrzeuganordnung nach einem der Ansprüche 2 bis 4, wobei der Kernbereich (22) hohl ausgebildet ist und insbesondere eine oder mehrere Verstärkungen aufweist.

6. Fahrzeuganordnung nach einem der vorhergehenden Ansprüche, wobei der Fahrzeugrahmen (10) ausschließlich aus Profilen (20) und Verbindungselementen (40) aufgebaut ist.

7. Fahrzeuganordnung nach einem der vorhergehenden Ansprüche, wobei die Verbindung der Profile (20) mittels der Verbindungselemente (40) durch Unterstützungselemente (48) verstärkt wird.

8. Fahrzeuganordnung nach einem der vorhergehenden Ansprüche, ferner umfassend eine erste Bodenplatte und eine zweite Bodenplatte, wobei die erste und zweite Bodenplatte voneinander beabstandet sind.

9. Fahrzeuganordnung nach Anspruch 8, bei der die erste und zweite Bodenplatte am gleichen Profil (20) befestigt sind.

10. Fahrzeuganordnung nach einem der vorhergehenden Ansprüche, bei der die Verbindungselemente (40) Anschläge für die Ausrichtung der Profile (20) aufweisen.

11. Fahrzeuganordnung nach einem der vorhergehenden Ansprüche, ferner umfassend ein Fahrgestell (12), wobei das Fahrgestell (12) mit dem Fahrzeugrahmen (10) über Lagerelemente verbunden ist, wobei das Fahrgestell (12) unterhalb des Fahrzeugrahmens (10) angeordnet ist.

12. Fahrzeuganordnung nach Anspruch 11, wobei das Fahrgestell (12) ferner zumindest einen Antrieb und eine Rolleinrichtung (8) aufweist.

## Claims

1. A modularly mountable vehicle arrangement comprising a vehicle frame (10), wherein the vehicle frame (10) has a plurality of profiles (20) and a plurality of connecting elements (40), wherein each profile (20) is formed with a profile cross-section and a profile longitudinal axis, and wherein the profiles (20) are releasably connected to one another with the connecting elements (40)
**characterized in that**
the profiles (20) comprise elongate holes (21, 28) in their interior along the longitudinal axis of the profile for fastening connecting elements (40), and the connecting elements (40) are fastened to the profiles (20) by means of the elongate holes (21, 28).

2. The vehicle arrangement according to claim 1, wherein a profile cross-section has a core region (22) and at least one groove section (24), and wherein the groove section (24) adjoins the core region (22).

3. The vehicle arrangement according to claim 2, wherein the groove portion (24) comprises at least one groove (25) with an undercut for receiving and holding attachments for use.

4. The vehicle arrangement according to claim 2 or 3, wherein the profile (20) comprises a plurality of groove sections (24) which are arranged circumferentially around the longitudinal axis of the profiles (20) around the core region (22).

5. The vehicle arrangement according to one of claims 2 to 4, wherein the core region (22) is hollow and in particular comprises one or more reinforcements.

6. The vehicle arrangement according to one of the preceding claims, wherein the vehicle frame (10) is constructed exclusively from profiles (20) and connecting elements (40).

7. The vehicle arrangement according to one of the preceding claims, wherein the connection of the profiles (20) by means of the connecting elements (40) is reinforced by support elements (48).

8. The vehicle arrangement according to one of the preceding claims, further comprising a first floor plate and a second floor plate, wherein the first and second floor plates are spaced apart from each other.

9. The vehicle arrangement according to claim 8, wherein the first and second floor plates are attached to the same profile (20).

10. The vehicle arrangement according to one of the preceding claims, wherein the connecting elements (40) comprise stops for aligning the profiles (20).

11. The vehicle arrangement according to one of the preceding claims, further comprising a chassis (12), wherein the chassis (12) is connected to the vehicle frame (10) via bearing elements, wherein the chassis (12) is arranged below the vehicle frame (10).

12. The vehicle arrangement according to claim 11, wherein the chassis (12) further comprises at least one drive and a roller device (8).

## Revendications

1. Ensemble de véhicule modulaire comprenant un cadre de véhicule (10), dans lequel
le cadre de véhicule (10) présente une pluralité de profilés (20) et une pluralité d'éléments de liaison (40), dans lequel chaque profilé (20) est conçu avec une section transversale de profilé et un axe longitudinal de profilé, et dans lequel les profilés (20) sont reliés les uns aux autres de manière amovible avec les éléments de liaison (40), **caractérisé en ce que** les profilés (20) comprennent à l'intérieur des trous oblongs (21, 28) le long de l'axe longitudinal du profilé pour la fixation d'éléments de liaison (40) et que les éléments de liaison (40) sont fixés aux profilés (20) au moyen des trous oblongs (21, 28) .

2. Ensemble de véhicule selon la revendication 1, dans lequel une section transversale de profilé présente une zone centrale (22) et au moins une section de rainure (24), et dans lequel la section de rainure (24) est adjacente à la zone centrale (22).

3. Ensemble de véhicule selon la revendication 2, dans lequel la section de rainure (24) présente au moins une rainure (25) avec une contre-dépouille pour recevoir et maintenir des extensions utilitaires.

4. Ensemble de véhicule selon la revendication 2 ou 3, dans lequel le profilé (20) comprend une pluralité de sections de rainure (24) disposées de manière circonférentielle autour de l'axe longitudinal des profilés (20) autour de la zone centrale (22).

5. Ensemble de véhicule selon l'une des revendications 2 à 4, dans lequel la zone centrale (22) est creuse et comporte notamment un ou plusieurs renforts.

6. Ensemble de véhicule selon l'une quelconque des revendications précédentes, dans lequel le cadre de véhicule (10) est constitué exclusivement de profilés (20) et d'éléments de liaison (40).

7. Ensemble de véhicule selon l'une quelconque des revendications précédentes, dans lequel la liaison des profilés (20) est renforcée par des éléments de support (48) au moyen des éléments de liaison (40).

8. Ensemble de véhicule selon l'une quelconque des revendications précédentes, comprenant en outre un premier panneau de plancher et un second panneau de fond, dans lequel les premier et second panneaux de fond sont espacés l'un de l'autre.

9. Ensemble de véhicule selon la revendication 8, dans lequel les premier et second panneaux de fond sont fixés au même profilé (20).

10. Ensemble de véhicule selon l'une quelconque des revendications précédentes, dans lequel les éléments de liaison (40) comportent des butées d'orientation des profilés (20).

11. Ensemble de véhicule selon l'une quelconque des revendications précédentes, comprenant en outre un châssis (12), dans lequel le châssis (12) est relié au cadre de véhicule (10) par des éléments d'appui, dans lequel le châssis (12) est disposé en dessous du cadre de véhicule (10).

12. Ensemble de véhicule selon la revendication 11, dans lequel le châssis (12) comprend en outre au moins un entraînement et un dispositif de roulement (8).
